# EUROPÄISCHE PATENTSCHRIFT

(11) **EP 4 114 605 B1**
(45) Veröffentlichungstag und Bekanntmachung des Hinweises auf die Patenterteilung: **31.12.2025**
(21) Anmeldenummer: 21709638.7
(22) Anmeldetag: 26.02.2021
(51) Int. Cl.: B23K 1/005, B23K 1/008, B23K 1/20, B23K 101/00, B23K 101/34

(54) **VERFAHREN ZUR HERSTELLUNG EINER FÜGEVERBINDUNG ZWISCHEN BLECHEN**
METHOD FOR PRODUCING A JOINING CONNECTION BETWEEN METAL SHEETS
PROCÉDÉ POUR RÉALISER UNE LIAISON D'ASSEMBLAGE ENTRE DES TÔLES

(30) Priorität: 04.03.2020 DE 102020202789
(43) Veröffentlichungstag der Anmeldung: 11.01.2023
(73) Patentinhaber: Magna International Inc., Aurora, ON L4G 7K1 (CA)
(72) Erfinder: LERCH, Jörg, 37359 Küllstedt (DE); KAUFHOLD, Stephan, 37308 Heilbad Heiligenstadt (DE); SCHLEICHERT, Edward, 63877 Sailauf (DE)
(74) Vertreter: Euler, Matthias
(86) Internationale Anmeldenummer: PCT/EP2021/054947
(87) Internationale Veröffentlichungsnummer: WO 2021/175742

(56) Entgegenhaltungen:
- DE-A1- 102015 122 395

## Beschreibung

Die vorliegende Erfindung betrifft ein Verfahren zur Herstellung einer Fügeverbindung zwischen mindestens zwei Blechen oder mindestens zwei Bauteilen aus Blech umfassend mindestens einen Schritt, in dem durch Warmpresslöten eine Verbindung zwischen den mindestens zwei Blechen oder Bauteilen aus Blech hergestellt wird (siehe beispielsweise DE 10 2015 122395 A1, das die Grundlage für den Oberbegriff von Anspruch 1 bildet).

### Stand der Technik

Der Automobilbau findet heute mit Hilfe der Strukturmechanik statt, die die Berechnung von Verformungen, Kräften und inneren Spannungen in Festkörpern, entweder für die Planung neuer oder die Nachrechnung bestehender mechanischer Strukturen umfasst.

Ein oft benutztes Mittel für Berechnungen in der Strukturmechanik ist die Finite-Elemente-Methode, die dazu führt, dass einzelne Baugruppen verbessert werden, indem Bleche oder einzelne Blechabschnitte zur Verstärkung miteinander verbunden werden.

Eine Möglichkeit, mindestens zwei Bleche zu verbinden, besteht mit den Tailored Welded Blank. Das sind maßgeschneiderte Platinen mit einer Blechplatine, welche typischerweise aus verschiedenen Werkstoffgüten und Blechdicken zusammengesetzt ist. Dieses vorgefertigte Halbzeug wird anschließend zum Beispiel durch Tiefziehen zum gewünschten Bauteil umgeformt.

Beim Tailor Welded Blank (TWB) werden die einzelnen Blechplatinen aneinandergeschweißt. Dies erfolgt in der Regel als Stumpfstoß mittels Laserschweißen.

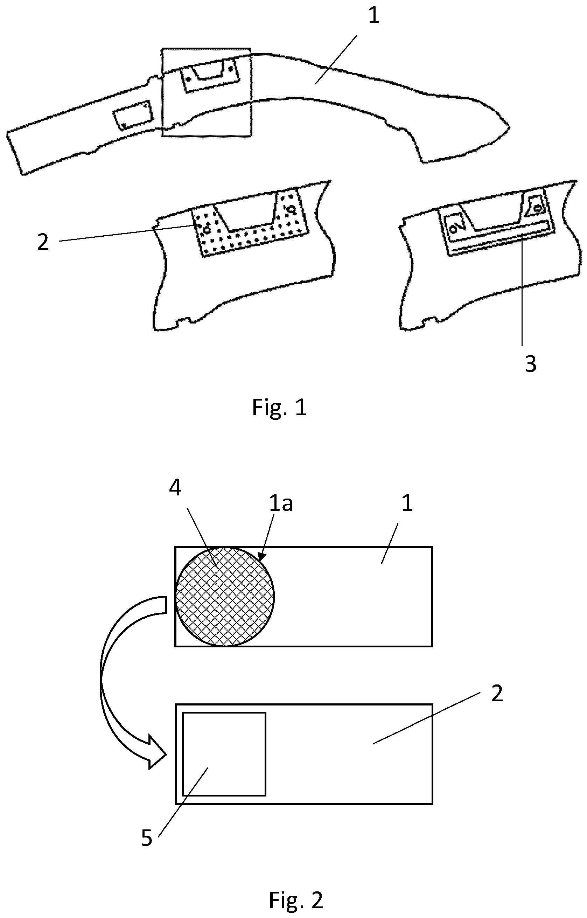

In Figur 1 ist ein erstes Bauteil 1, eine Seitenteil-Platine, beispielhaft dargestellt. In dem herausvergrößerten Teilbereich der Seitenteil-Platine ist ein, Blechabschnitt, ein zweites Bauteil 2, entweder punktuell verschweißt oder mit einem Laserschweißverfahren, wie rechts dargestellt, entlang einer Kontur 3 verbunden.

Auch das sogenannte Warmpresslöten als Fügeverfahren ist grundsätzlich aus dem Stand der Technik bekannt. Das Warmpresslöten ist ein stoffschlüssiges thermisches Fügeverfahren für Kombinationen aus Leichtmetallen und Stahlblechen, wie sie im modernen Fahrzeugkarosseriebau eingesetzt werden. Vor dem eigentlichen Lötvorgang wird eine Oxidhaut auf der Bauteiloberfläche durch eine Vorbelotung der Fügepartner mit Hilfe eines Plasmaauftraglötens oder des atmosphärischen Plasmaspritzens beseitigt. Dadurch lassen sich artgleiche sowie artfremde Verbindungen aus hochfesten Aluminiumlegierungen oder Magnesiumlegierungen einerseits sowie verzinktem Stahlblech andererseits herstellen. Die Bleche aus den Aluminiumlegierungen beziehungsweise Magnesiumlegierungen sowie aus Stahlblech werden im Bereich der Fügeflächen durch Plasmaspritzen mit Zink oder einer Zinklegierung als Lot beschichtet. Anschließend erfolgt die Fügeverbindung der Bleche durch Warmpresslöten, jedoch ohne Umformung der Fügepartner.

Beim Einsatz von Blechen aus Vergütungsstahl im Karosseriebau ist die Anwendung der Warmumformung erforderlich, weil diese Werkstoffe bei Raumtemperatur nicht umformbar sind. Das Herstellen einer Fügeverbindung solcher warmformgehärteten Bauteile aus Vergütungsstahl durch das bislang übliche Schweißen als Fügetechnik führt zu einer Werkstoffschädigung.

In der Serienproduktion wurde so vorgegangen, dass erst eine Warmumformung der Einzelteile erfolgte und diese anschließend in einem separaten Arbeitsgang im Karosseriebau gefügt wurden.

Aus der DE 10 2005 038 493 A1 ist ein Verfahren zur Herstellung einer Fügeverbindung zwischen zwei Blechen oder zwei Bauteilen aus Blech bekannt, wobei das Herstellen der Fügeverbindung gleichzeitig mit einem Umformprozess einhergeht. Dadurch ist es möglich, die Fügeverbindung bereits bei dem ohnehin erforderlichen Warmumformprozess herzustellen und der bislang übliche nachgeschaltete Fügeprozess im Karosseriebau kann entfallen. Das Verfahren ermöglicht Einsparungszeiten in der Fertigung und Einsparungen bei den Investitionen, da insbesondere die Anzahl der notwendigen Öfen beziehungsweise Pressen für das Warmumformen reduziert werden kann. Durch einen Umformprozess können insbesondere mehrere Bauteile gleichzeitig umgeformt und gefügt werden, so dass mindestens ein Umformprozess und ein Fügeprozess eingespart wird. Der Umformprozess, insbesondere das sogenannte Formhärten, kann gleichzeitig mit einem Warmpresslöten zweier oder mehrerer Bauteile durchgeführt werden. Die Herstellung der Fügeverbindungen erfolgt während des Umformvorgangs durch Presslöten, wobei zusätzliche Verfahrensschritte zum Herstellen der Fügeverbindung nicht notwendig sind.

DE 10 2015 122 393 A1 zeigt ein Verfahren zur Herstellung eines Verbundhalbzeuges mit folgenden Verfahrensschritten: Herstellen eines H-Partners aus gegenüber einem Partnerrohling (L-Partner) höherfesterem Material, wobei der H-Rohling auf einer Verbindungsfläche Oberflächenstrukturen aufweist, die sich für einen Formschluss mit einem L-Partner eignen, Herstellen eines Partners aus gegenüber dem H-Rohling niedriger festerem Material (L-Partner), Zusammenführen des H-Partners und des L-Partners, Verbinden des H-Partners mit dem L-Partner durch Aufbringen einer Druckkraft zu einem mindestens formschlüssig oder auch stoffschlüssig verbundenen Verbundhalbzeug, indem zumindest ein Teil des Werkstoffes des L-Partners in die Oberflächenstrukturen des H-Partners, die für den Formschluss mit dem L-Partner bestimmt sind, plastisch fließend formschlüssig ausfüllend gedrückt wird.

DE 10 2005 038 493 A1 zeigt ein Verfahren zur Herstellung einer Fügeverbindung zwischen zwei Blechen oder zwei Bauteilen aus Blech umfassend mindestens einen Schritt, in dem durch Warmpresslöten eine Verbindung zwischen den mindestens zwei Blechen oder Bauteilen aus Blech hergestellt wird.

DE 10 2004 038 493 A1 zeigt ein Verfahren zum Entschichten von Bauteilen. Eine äußere Deckzone bzw. Aufbauzone der Beschichtung wird auf chemisch-mechanischem Weg und eine innere Diffusionszone der Beschichtung durch Laserstrahlabtragen entfernt.

DE 10 2015 122395 A1 zeigt eine Verbindung zweier Bleche durch Warmumformen. Um die beiden Fügepartner zu optimieren, wird mindestens ein Partner mit Verbindungsstrukturen versehen

Die Aufgabe der vorliegenden Erfindung besteht darin, ein Verfahren zur Herstellung einer Fügeverbindung zwischen mindestens zwei Blechen oder mindestens zwei Bauteilen aus Blech zur Verfügung zu stellen, welches zu einer Vereinfachung des Fertigungsprozesses führt und somit Kosteneinsparungen in einer Serienfertigung ermöglicht.

Durch die Erfindung soll eine flächige Verbindung zwischen den beschichteten Warmformblechen im Warmformprozess entstehen, welche im Belastungsfall des Gesamtbauteiles im Crash (auftretende Scher- und Schälkräfte) eine höhere Widerstandfähigkeit gegen Versagen zeigt. Ein Schweißprozess soll vermieden werden.

### Beschreibung der Erfindung

Die Aufgabe wird wird mit einem Verfahren gemäß Anspruch 1 gelöst.

Es ist dabei so, dass das Aufbrechen der Beschichtung bis zum Blech erfolgt. Die Bauteile können zusätzlich noch spezieller in Form und Materialstärke auf den Anwendungsfall im Fahrzeug entwickelt werden, was zeitgleich eine Reduzierung von Gewicht zur Folge hat.

Des Weiteren befindet sich kein Luftspalt zwischen den Blechen, welcher als Isolator Temperaturunterschiede bis 45°C hervorrufen kann und sich somit negativ auf die Bauteileigenschaften auswirken würde.

Die flächige Verbindung zwischen zwei oder mehreren beschichteten Warmformblechen im Warmumformprozess zeigen im Belastungsfall des Gesamtbauteiles bei auftretende Scher- und Schälkräfte eine höhere Belastbarkeit.

Erfindungsgemäß erfolgt das Aufbrechen der Beschichtung mit einem Prägestempel. Dabei wird über Prägekräfte die Beschichtung aufgebrochen.

Um den Prozess zu optimieren wird nur der Teilbereich, der zur nachfolgenden Verbindung dient, aufgebrochen.

Zur Verbindung wird im Teilbereich ein Lot, wahlweise Lot und Flussmittel oder ein Hartlot aufgetragen.

Als nächster Verfahrensschritt werden die mindestens zwei Bleche gegeneinander fixiert und danach dem Warmumformprozess zugeführt.

Es ist von Vorteil, dass der Energieeintrag für die Warmumformung für das Verlöten der Bleche ausreicht.

### Beschreibung der Figuren

Die Erfindung wird nachfolgend beispielhaft unter Bezugnahme auf die beigefügte Zeichnung beschrieben.
- Fig. 1: zeigt eine schematische Darstellung einer Seitenteilplatine im Stand der Technik,
- Fig. 2: zeigt schematisch eine erfindungsgemäße Blechanordnung,
- Fig. 3: zeigt einen Schnitt durch ein beschichtetes Blech.
- Fig. 4: zeigt einen Schnitt durch ein unbeschichtetes Blech mit aufgerauter Oberfläche
- Fig. 5: zeigt einen Schnitt durch ein beschichtetes Blech mit Abtragungen.

Als Ausgangsmaterial liegen Platinen aus warmformbaren Stählen vor. Diese Materialien sind ein gängiges Ausgangsprodukt für den Leichtbau.

Durch die Warmumformung sind die benötigten Umformkräfte gering, und es kommt nicht, wie beim Tiefziehen hoch- und höchstfester Stähle, zur Rückfederung. Beispielsweise wird ein 22MnB5 Stahl sowohl für tragende Komponenten als auch für crashrelevante Bauteile eingesetzt, die keine hohen Verformungen ertragen müssen. Typische Anwendungen sind somit Komponenten, die als Eindringschutz fungieren, wie A- und B-Säulen, Stoßfänger, Quer und Dachträger, aber auch Mitteltunnel.

Die Austenitisierung erfolgt üblicherweise in Durchlauföfen, aber auch in Induktionsöfen bzw. Mehrkammeröfen. Dabei führt die Anwesenheit von Sauerstoff in der Ofenatmosphäre zur Verzunderung und Randentkohlung des Halbzeugs. Zwar kann die Erwärmung auch unter Schutzgasatmosphäre erfolgen, aber spätestens beim Transfer in das Presshärtewerkzeug kommt es zur Sauerstoffexposition und damit zum Metallabbrand.

Dieser führt zum einen zu einer Verringerung der Werkzeugstandzeit und verschlechtert zum anderen den Wärmeübergang zwischen Umformteil und Werkzeug. Daher werden die Bleche häufig mit einer zunderhemmenden Beschichtung versehen. Von den verschiedenen möglichen Beschichtungen wird die zuerst entwickelte Feueraluminierung, eine Aluminium-Silizium-Beschichtung, zurzeit am häufigsten eingesetzt.

Für eine flächige Verbindung wird erfindungsgemäß ein erstes Bauteil 1, das eine AISi-Beschichtung aufweist, mit einem zweiten Bauteil 2 über ein Hartlot 5 verbunden. In der Vorbereitung wird der Teilbereich 1a des ersten Bauteils 1 mit einem Werkzeug behandelt, das die Beschichtung 6 gezielt aufbricht.

Da dieses Aufbrechen zeitlich kurz vor der Verbindung der Bleche erfolgt, treten keine Probleme mit Oxidation auf.

Erfindungsgemäß wird ein Prägestempel verwendet, der mechanisch im Teilbereich 1a der Verbindung die Oberfläche 6a der Beschichtung perforiert. In der Figur 2 ist das als Waffelmuster 4 dargestellt. Im Beispiel ist eine kreisförmige Einprägung zu sehen, es sind aber auch anderer Konturen möglich. Durch die Perforierung wird die AlSi- Oberfläche gezielt aufgebrochen, um eine optimale Verbindung von Stahl, Aluminium und Lot zu schaffen.

Das heißt, dass die entstehenden Rillen und Nuten in der Beschichtung 6 bis zur Oberfläche 7a der Stahlplatine 7 reichen. Die Tiefe entspricht der Dicke 6b der Beschichtung 6. Anschließend wird das Hartlot 5 auf den Teilbereich 1 aufgebracht. Das Hartlot 5 kann auch durch ein anderes Lotmaterial und ein Flussmittel ersetzt werden.

Das zweite Bauteil wird ebenfalls wie oben beschrieben vorbereitet. Anschließend werden die beiden Bauteile 1 und 2 fixiert und dem Warmformprozess zur Umformung des Blechpakets zugeführt. Der Warmumformungsprozess liefert die für flächige Verbindung notwendige Temperatur. Anschließend wird das Blechpaket in der Presse im Warmformumformwerkzeug mechanisch umformt und abgekühlt.

Das Verfahren lässt sich für alle Warmformstähle verwenden, Beispiele sind dabei USIBOR oder DUCTIBOR. Die Beschichtung ist vorteilhafterweise AlSi, kann aber auch eine andere Beschichtung sein.

Das Aufbrechen der Beschichtung geschieht an allen Bauteilen, die miteinander verbunden werden sollen.

Alternativ zum dem mechanischen Aufbrechen der Beschichtung kann - nicht erfindungsgemäß - ein Aufbrechen mit einem Laser-Werkzeug mithilfe des Laserstrahls erfolgen.

Die Beschichtung AlSi wird mittels des Lasers punktuell perforiert, wobei auch hier ein Bereich 1a vorgewählt wird, indem die Lotverbindung hergestellt werden soll. Die Abstände der Perforierungen können je nach Bedarf variieren. Die Perforierungen erlauben eine punktuelle Freistellung der Stahlplatine mit einer lokalen Entfernung des AlSi Beschichtung bis zur Oberflache 7a der Stahlplatine. Durch Einstellung der Laserleistung ist die Eindringtiefe vorgeben und das Material der Beschichtung 6 mit der Dicke 6b kann einfach und sehr genau bis zur Oberfläche 7a abgetragen werden.

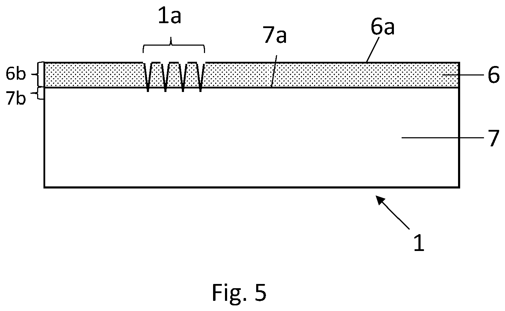

In einer weiteren nicht erfindungsgemäßen Ausführungsform wird auch die Oberflache 7a der Stahlplatine 7 zusätzlich zum Abtragen der Beschichtung 6 aufgeraut, wie es in Figur 5 dargestellt ist. Hier wird die Laserleistung so eingestellt, dass der Laser zusätzlich zur Dicke 6a der Beschichtung auch noch Material auch der Stahlplatine 7 in der Tiefe 7b abträgt.

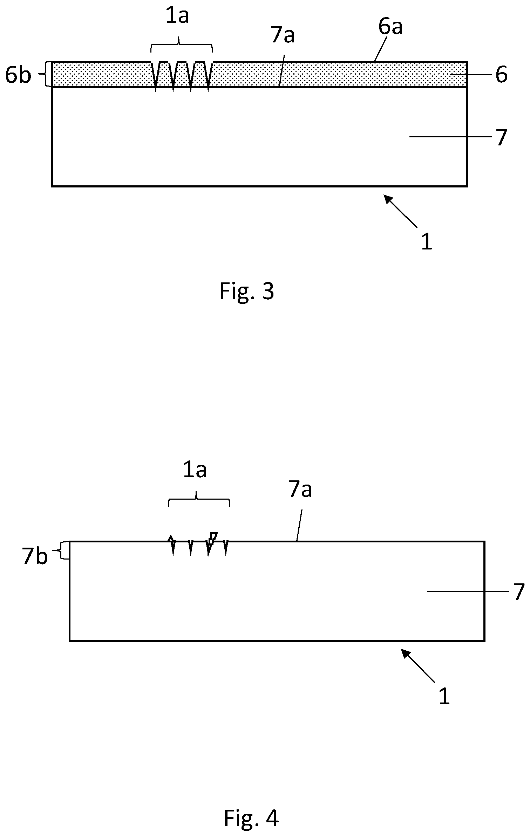

In einer weiteren Ausführungsform wird die Oberfläche 7a einer unbeschichteten Stahlplatine 7 durch ein gesondertes Laser-Pulsverfahren mit Höhen und Tiefen im Teilbereich 1a versehen. Dadurch erhält die Oberfläche 7a einen sehr rauen Charakter. Die Oberfläche 7a - wie in der Figur 4 angedeutet- weist Hinterschnitte auf und stellt dadurch eine gute Verbindungsoberfläche dar.

Mit dem erfindungsgemäßen Verbindungsverfahren lassen sich somit beschichtete Bleche miteinander oder mit einem unbeschichteten Blech verbinden.

Je nach Anforderung an die Verbindung wird die Vorbehandlung der Bleche in Teilbereich 1a, der zur Verbindung dient, an der Beschichtungsoberfläche 6a, an der Stahlplatinenoberfläche 7a oder an beiden vorgenommen.

## Patentansprüche

1. Verfahren zur Herstellung einer Fügeverbindung zwischen mindestens zwei Blechen oder zwei Bauteilen (1, 2) aus warmumformbaren Blech wobei mindestens eines der Bleche mit einer Beschichtung gegen Verzunderung versehen ist, umfassend mindestens einen Schritt, in dem durch Warmpresslöten eine Verbindung zwischen den mindestens zwei Blechen oder Bauteilen aus Blech (1,2) hergestellt wird, **dadurch gekennzeichnet, dass** mindestens eine der Oberflächen (6a, 7a) der zu verbindenden Bleche oder Bauteile (1,2) vorbehandelt wird, um die Beschichtung (6) aufzubrechen und die Oberfläche (7a) des Bleches aufzurauen, wobei das Aufbrechen der Beschichtung (6) bis zur Oberfläche (7a) des Blechs (7) über die gesamte Dicke (6b) der Beschichtung (6) erfolgt, wobei das Aufbrechen der Beschichtung mit einem Prägestempel erfolgt.

2. Verfahren nach Anspruch 1, **dadurch gekennzeichnet, dass** die Beschichtung (6) nur in dem Teilbereich (1a), der zur nachfolgenden Verbindung dient, aufgebrochen wird.

3. Verfahren nach einem der vorhergehenden Ansprüche, **dadurch gekennzeichnet, dass** im Teilbereich ein Lot oder ein Lot mit Flussmittel aufgetragen wird.

4. Verfahren nach einem der vorhergehenden Ansprüche, **dadurch gekennzeichnet, dass** ein Hartlot auf den Teilbereich aufgelegt wird.

5. Verfahren nach einem der vorhergehenden Ansprüche, **dadurch gekennzeichnet, dass** die mindestens zwei Bleche gegeneinander fixiert und danach dem Warmumformprozess zugeführt werden.

6. Verfahren nach einem der vorhergehenden Ansprüche, **dadurch gekennzeichnet, dass** der Energieeintrag für die Warmumformung für das Verlöten der Bleche ausreicht.

## Claims

1. Method for producing a joining connection between at least two metal sheets or two components (1, 2) made of hot-formable sheet metal, wherein at least one of the metal sheets is provided with a coating against scaling, comprising at least one step in which a connection between the at least two metal sheets or components (1, 2) made of sheet metal is produced by hot compression soldering, **characterized in that** at least one of the surfaces (6a, 7a) of the metal sheets or components (1, 2) to be connected is pretreated in order to break up the coating (6) and to roughen the surface (7a) of the metal sheet, wherein the breaking-up of the coating (6) as far as the surface (7a) of the metal sheet (7) is effected over the entire thickness (6b) of the coating (6), wherein the breaking-up of the coating is effected with an embossing punch.

2. Method according to Claim 1, **characterized in that** the coating (6) is broken up only in the subregion (1a) which serves for the subsequent connection.

3. Method according to either of the preceding claims, **characterized in that** a solder or a solder with flux is applied in the subregion.

4. Method according to any of the preceding claims, **characterized in that** a hard solder is placed onto the subregion.

5. Method according to any of the preceding claims, **characterized in that** the at least two metal sheets are fixed against one another and then fed to the hot-forming process.

6. Method according to any of the preceding claims, **characterized in that** the energy input for the hot forming is sufficient for the soldering of the metal sheets.

## Revendications

1. Procédé pour réaliser une liaison d'assemblage entre au moins deux tôles ou deux composants (1, 2) composés d'une tôle façonnable à chaud, au moins une des tôles étant pourvue d'un revêtement contre le calaminage, comprenant au moins une étape, dans laquelle une liaison est réalisée entre les au moins deux tôles ou composants en tôle (1, 2) par un brasage par pression à chaud, **caractérisé en ce qu'**au moins une des surfaces (6a, 7a) des tôles ou composants (1, 2) à relier est prétraitée pour rompre le revêtement (6) et pour rendre la surface (7a) de la tôle rugueuse, la rupture du revêtement (6) étant effectuée jusqu'à la surface (7a) de la tôle (7) sur la totalité de l'épaisseur (6b) du revêtement (6), la rupture du revêtement étant effectuée avec un poinçon d'estampage.

2. Procédé selon la revendication 1, **caractérisé en ce que** le revêtement (6) est rompu seulement dans la zone partielle (1a), qui sert à la liaison suivante.

3. Procédé selon l'une des revendications précédentes, **caractérisé en ce qu'**un métal d'apport de brasage ou un métal d'apport de brasage avec un décapant est appliqué dans la zone partielle.

4. Procédé selon l'une des revendications précédentes, **caractérisé en ce qu'**un métal d'apport de brasage fort est déposé sur la zone partielle.

5. Procédé selon l'une des revendications précédentes, **caractérisé en ce que** les au moins deux tôles sont fixées l'une contre l'autre puis sont amenées au processus de façonnage à chaud.

6. Procédé selon l'une des revendications précédentes, **caractérisé en ce que** l'apport en énergie pour le façonnage à chaud suffit pour le soudage des tôles.
